# EUROPEAN PATENT SPECIFICATION

(11) **EP 2 146 460 B1**
(45) Date of publication and mention of the grant of the patent: **05.01.2011**
(21) Application number: 08757884.5
(22) Date of filing: 30.06.2008
(51) Int. Cl.: H04L 12/18, H04L 12/14, H04L 12/54, H04L 12/26, H04L 29/06

(54) **METHOD AND SYSTEM OF ACQUIRING MEDIA DATA IN THE APPLICATION LAYER MULTICAST NETWORK**
VERFAHREN UND SYSTEM ZUM ERHALT VON MEDIA-DATEN IN EINEM NETZ MIT MULTICAST AUF ANWENDUNGSSCHICHT
PROCÉDÉ ET SYSTÈME D'ACQUISITION DE DONNÉES MULTIMÉDIA DANS LE RÉSEAU DE MULTIDIFFUSION DE LA COUCHE D'APPLICATION

(30) Priority: 03.07.2007 CN 200710118257
(43) Date of publication of application: 20.01.2010
(73) Proprietor: Huawei Technologies Co., Ltd., Longgang District, Shenzhen Guangdong 518129 (CN)
(72) Inventor: LI, Feng, Shenzhen, 518129 (CN)
(74) Representative: Kreuz, Georg Maria
(86) International application number: PCT/CN2008/071490
(87) International publication number: WO 2009/003407

(56) References cited:
- EP-A1- 1 619 853
- WO-A2-03/071392
- CN-A- 1 606 751
- CN-A- 1 852 231
- CN-A- 1 925 412
- US-A1- 2003 147 392
- US-A1- 2006 291 412
- US-A1- 2007 067 794
- KOSTAS KATRINIS ET AL: "11. Application-Layer Multicast" 1 January 2005 (2005-01-01), PEER-TO-PEER SYSTEMS AND APPLICATIONS LECTURE NOTES IN COMPUTER SCIENCE;;LNCS, SPRINGER, BERLIN, DE, PAGE(S) 157 - 170 , XP019016177 ISBN: 9783540291923 * the whole document *

## Description

### Field of the Invention

The present invention relates to a network communication technology, and in particular, to a method and system for acquiring media data in an application layer multicast network.

### Background of the Invention

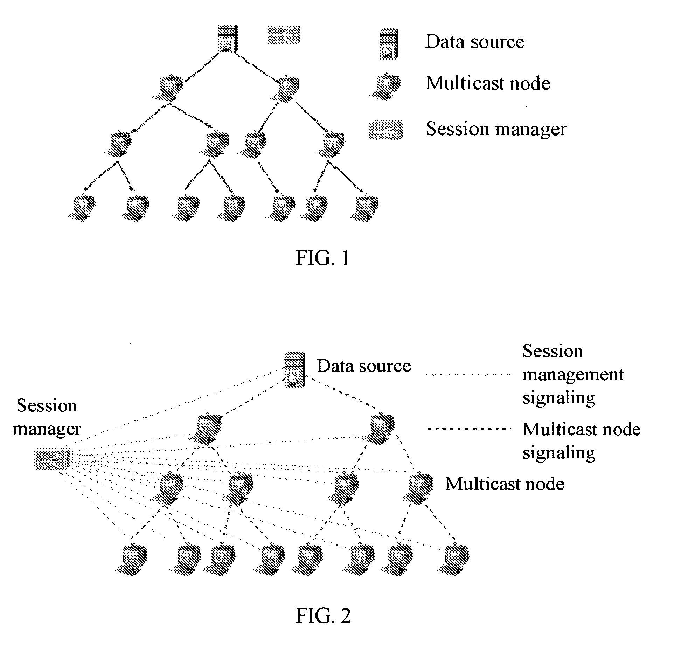

An Application Layer Multicast (ALM) network organizes member nodes in a group into a logical application layer overlay network and provides a multicast routing protocol at the application layer to construct and maintain the network. The ALM network constructs a forwarding tree at the application layer. Data is transmitted between the nodes in unicast mode through the IP protocol. FIG. 1 shows a structure of an application layer multicast network. The multicast tree in FIG. 1 consists of a multicast source and multicast nodes. Generally, the multicast source is a server, and the multicast nodes are common nodes. According to different positions of the multicast nodes in the multicast tree, the multicast nodes are classified into intermediate nodes and leaf nodes. The intermediate nodes are responsible for receiving data streams from upper-level nodes and forwarding the received data streams to lower-level nodes. The leaf nodes are responsible for receiving data streams from upper-level nodes only. The leaf nodes cannot forward the received data streams to lower-level nodes. The functions of the session manager in FIG. 1 are as follows: selecting a parent node for a node when the node is accessed and managing the multicast tree. The preceding multicast tree works at the application layer. At the network layer, data streams between nodes are unicast streams; that is, data is transmitted in point-to-point mode.

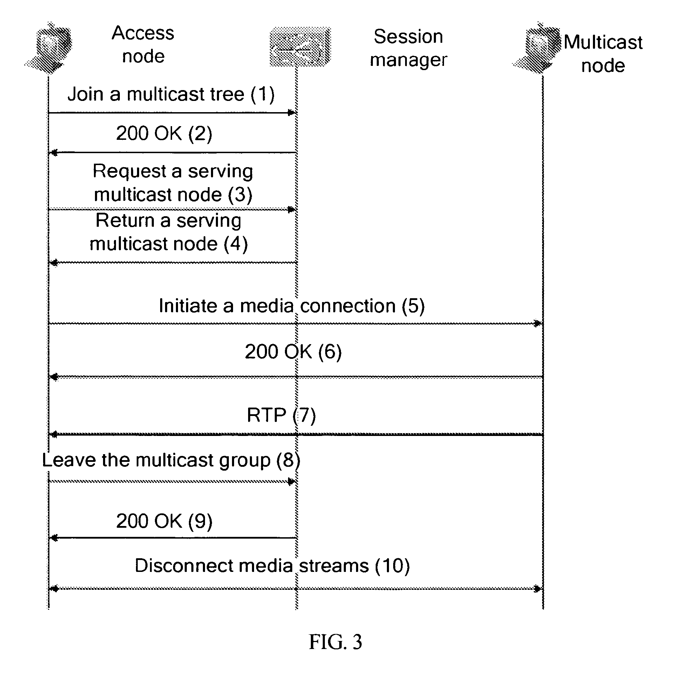

FIG. 2 shows relations between various messages in a multicast tree in the prior art. In FIG. 2, the session manager interworks with all nodes in the multicast tree to complete the join and leave of nodes, query and publishing of contents, and management of the multicast tree. The media connection signalings between all nodes occur between nodes without passing through the session manager. FIG. 3 is a simplified flowchart of acquiring media data streams by an access node in an application layer multicast network. FIG. 3 includes the following steps:
Step 1: An access node, which may be a User Equipment (UE), sends a request to a session manager to join a multicast group.
Step 2: After authentication, the session manager lets the access node join the multicast group, and then notifies the access node of successful join through an acknowledgement message, namely, a 200 OK message.
Step 3: The access node requests a serving multicast node from the session manager. The multicast node may be a data source node or another node.
Step 4: The session manager selects a serving multicast node for the access node and returns the selected node to the access node.
Step 5: The access node sends a media connection request to the multicast node.
Step 6: After negotiating media parameters with the access node, the multicast node sends an acknowledgement message, namely, a 200 OK message.
Step 7: The multicast node transmits media data streams to the access node; in FIG. 3, the multicast node transmits media data streams through the Real-time Transport Protocol (RTP).
Step 8: The access node is ready to leave the multicast group and notifies the session manager of its leave.
Step 9: The session manager manages the leave of the access node, and returns an acknowledgement message, namely, a 200 OK message to the access node.
Step 10: The access node disconnects the media connection with the multicast node.

The following problems have become aware: In the process of application layer multicast message transmission in the prior art, the session manager can acquire the related information of an access node (namely, a UE) in the session join and leave processes, as described In steps 1-4 and step 8; but the session manager cannot acquire related information (media session information) of the access node in the media connection process, as described in steps 5 and 6; the session manager also cannot acquire the media traffic information of the access node, as described in step 7. Therefore, according to the application layer multicast structure and the message transmission process in the prior art, the media data such as media session information of a UE cannot be collected. As a result, the subsequent quasi-real-time charging or traffic-based changing process cannot be implemented.

To sum up, in the process of implementing the present invention, the inventor finds at least the following problems in the prior art: According to the application layer multicast structure and the message transmission process in the prior art, the media data such as media session information of a UE cannot be collected in the media connection process.

EP 1619853 A1 discloses a RSTP proxy extended to detect streaming session events and report to valued streaming applications the notified ones. In order to control the streaming session status by the Application Server, AS, and cut out the streaming applications upon the streaming session status, an SSEM module is introduced to monitor the RTSP session state change and provide it to the IMS application running on the AS and to enable IMS domain flexible charging of streaming sessions.

WO 03/071392 A2 defines a charging mechanism for multicasting. In an IP multicast network with shared transport media, when a user has stopped using a shared transport media service, it is difficult to calculate the connection time or data volume received (see page 4 lines 15-18). The user terminal 110 sends a join message identifying the start time and the stop time for charging. The last hop router 120 stores the start time and the stop time, and forwards the charging data to the billing unit 171 when the connection terminates.

### Summary of the Invention

The objective problem is solved by the system claim 1,

According to the foregoing technical solution, in embodiments of the present invention, the media data such as media session information of a node can be acquired by transferring a media connection signaling between nodes, thus implementing subsequent quasi-real-time charging or traffic-based charging in an application layer multicast network.

### Brief Description of the Drawings

FIG 1 shows a structure of an application layer multicast network in the prior art;
FIG 2 shows relations between various messages in a multicast tree in the prior art;
FIG. 3 is a flowchart of acquiring media data streams by an access node in the prior art;
FIG. 4 shows structural relations between various components in a multicast tree in an embodiment of the present invention;
FIG. 5 shows a structure of a media signaling agent in an embodiment of the present invention;
FIG. 6 is a flowchart of a charging method in an embodiment of the present invention;
FIG. 7 shows a structure of a charging system in an embodiment of the present invention;
FIG 8 is a schematic drawing illustrating traffic collection in an embodiment of the present invention;
FIG. 9 is a flowchart of controlling traffic collection according to the structure of FIG. 7 in an embodiment of the present invention;
FIG. 10 is another schematic drawing illustrating traffic collection in an embodiment of the present invention;
FIG. 11 is a flowchart of controlling traffic collection according to the structure of FIG. 10 in an embodiment of the present invention;
FIG. 12 is a flowchart of acquiring media data streams by an access node after a media signaling agent is added in a first embodiment of the present invention;
FIG. 13 is a flowchart of controlling traffic collection in a second embodiment of the present invention; and
FIG. 14 is a flowchart of controlling traffic collection in a third embodiment of the present invention.

### Detailed Description of the Invention

Embodiments of the present invention provide a method and system for acquiring media data in an application layer multicast network. The media data such as media session information of a node can be acquired by transferring a media connection signaling between nodes; thus, the corresponding CDR can be generated according to the collected media data to implement quasi-real-time charging or traffic-based charging in an application layer multicast network.

In embodiments of the present invention, media data is acquired by transferring a media connection signaling between nodes. Specifically, a mapping between nodes and a transfer ID may be established. The nodes may be an access node and a multicast node. The transfer ID may be generated after the access node joins a multicast group or generated in the session process of the access node. In the media connection process of the access node, the multicast node can be found according to the transfer ID, and a media connection signaling between the access node and the multicast node can be transferred.

The mapping between the access node, the multicast node, and the transfer ID may be established by binding the address of the access node, address of the multicast node, and transfer ID. When the access node establishes a media connection, the address of the multicast node can be found according to the address of the access node and the transfer ID. Thus, a media connection signaling between the nodes can be transferred by a third party.

In the process of transferring a media connection signaling, the media session information (namely, media data) of a node can be acquired. The media session information may be media connection status information and node label information.

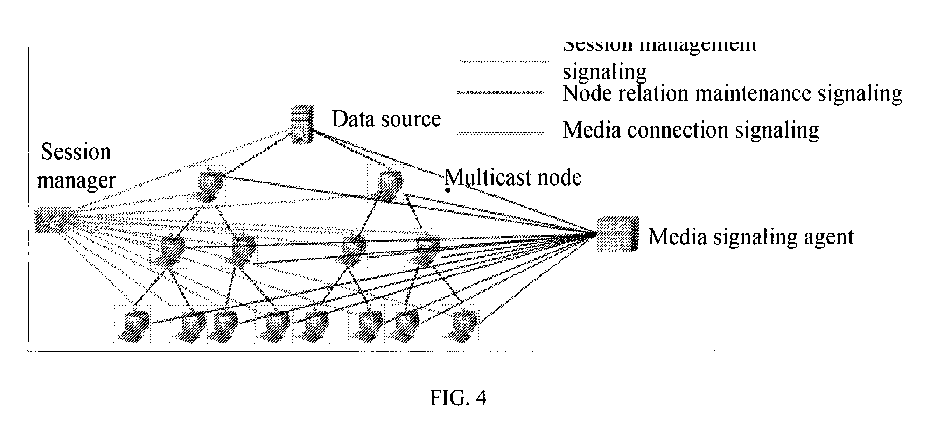

Embodiments of the present invention further provide a media signaling agent in an application layer multicast network. FIG. 4 shows structural relations between various components in a multicast tree in an embodiment of the present invention. The application layer multicast network includes a media signaling agent. The media signaling agent is configured to transfer a media connection signaling between nodes and to acquire the media session information of a node. The process of transferring a media connection signaling is mentioned above.

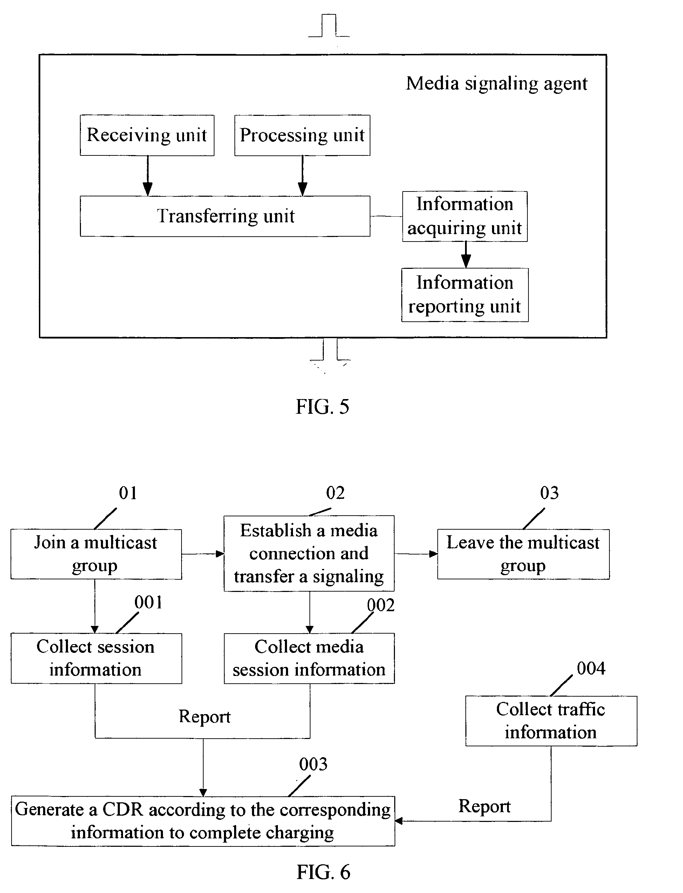

FIG. 5 shows a structure of a media signaling agent which includes a receiving unit, a processing unit, a transferring unit, and an information acquiring unit. The receiving unit is configured to receive a media connection signaling of a node in the media connection process. The processing unit is configured to: establish a mapping between nodes that establish a media connection and a transfer ID, and find a node according to the transfer ID when the nodes establish a media connection. The transferring unit is configured to transfer the media connection signaling received by the receiving unit according to the mapping established by the processing unit. The information acquiring unit is configured to acquire the media session information of the access node in the process of transferring the media connection signaling by the transferring unit.

The media signaling agent may further include an information reporting unit, which is configured to report media session information acquired by the information acquiring unit. The media session information can be reported to the UM for processing related data.

Embodiments of the present invention further provide a system for acquiring media data in an application layer multicast network. The system includes a node that establishes a media connection and a media signaling agent. The node that establishes a media connection is configured to generate a media connection signaling in the media connection process (may be a message generated by the access node and the multicast node in the media connection process). The media signaling agent is configured to transfer the media connection signaling and to acquire the media session information of a node.

In addition, to implement charging management in an application layer multicast network, related information in the session process and in the media connection process of UEs in an application layer multicast network needs to be collected. After the information is collected, quasi-real-time charging can be implemented for the UEs. If the UEs need to be charged by traffic, the traffic information of the UEs also needs to be collected.

Embodiments of the present invention further provide a charging method in an application layer multicast network. FIG. 6 is a flowchart of a charging method in an embodiment of the present invention. FIG. 6 includes the following steps:
Step 01: An access node joins a multicast group. The step of requesting to join a multicast group by an access node may be a step described in "Background of the Invention". In the session process of the access node, step 001 may be executed; that is, the session manager collects the session information of the access node in the session process. The session information is the information generated in the session process in which the access node joins a multicast group.
Step 02: The access node establishes a media connection with a multicast node. A media signaling agent transfers a message between the access node and the multicast node. Specifically, the media signaling agent establishes a mapping between the access node, the multicast node, and the transfer ID; when the access node establishes a media connection, the media signaling agent finds the multicast node according to the transfer ID, and then transfers a message between the access node and the multicast node. The transfer ID may be generated after the access node joins a multicast group or be generated in the session process of the access node. The mapping between the access node, the multicast node, and the transfer ID may be established by binding the address of the access node, address of the multicast node, and transfer ID. When the access node establishes a media connection, the address of the multicast node can be found according to the address of the access node and the transfer ID. Thus, information, namely, the message, exchanged between the access node and the multicast node can be transferred by a third party.
   In the media connection process of the access node, step 002 may be executed; that is, the media signaling agent collects the media session information of the access node. The media session information is the information generated by the access node in the media connection process. The media session information may be media connection status information and the label information of the access node.
Step 03: The access node leaves the multicast group. The step of requesting to leave the multicast group may be a step described in "Background of the Invention".
Step 003: A UM generates a CDR according to the collected media session information and session information to complete charging. After the session information of the access node in the session process and the media session information of the access node are collected in steps 001 and 002, a quasi-real-time charging CDR is generated according to the information, and the whole charging process is complete.

In addition, in the media connection process of the access node, step 004 can be executed; that is, the UM collects the traffic information of the access node in the media connection process. Then, a traffic-based charging CDR can also be generated according to the traffic information and the charging process is complete.

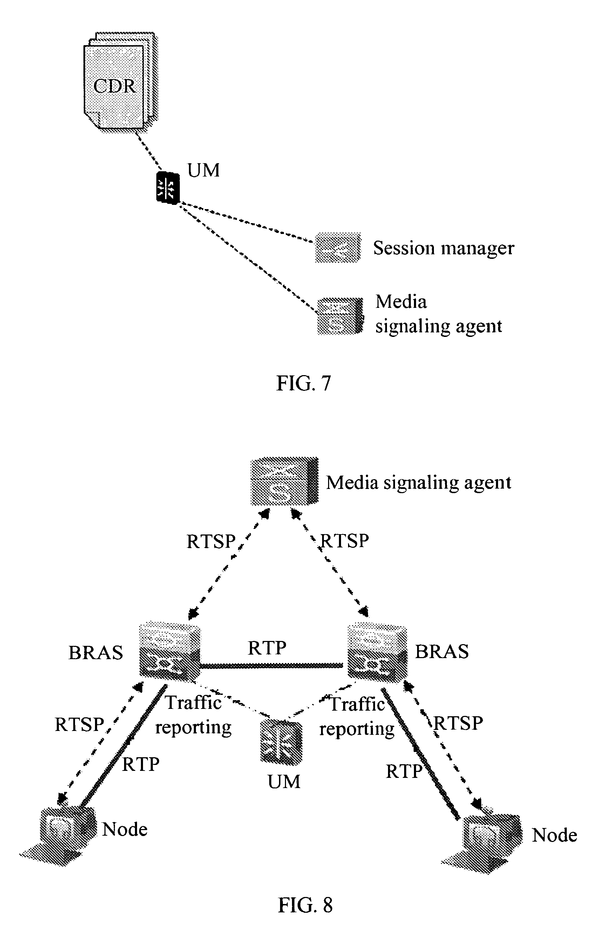

An embodiment of the present invention further provides a charging system in an application layer multicast network. FIG. 7 shows a structure of the charging system. In FIG. 7, the charging system includes a session manager, a media signaling agent, and a UM. The session manager is configured to collect and report the session information of an access node in the session process. The session manager interworks with all nodes in the multicast network to complete the join and leave of the access node, query and publishing of contents, and management of the multicast tree. In addition, the session manager collects and reports the session information of the access node in the session process to the UM.

The media signaling agent is configured to: transfer a message between an access node and a multicast node, and collect and report the media session information of the access node in the media connection process. Specifically, in the media connection process of the access node, the media signaling agent may generate a transfer ID (agent session ID). Then, the media signaling agent establishes a mapping between the access node, the multicast node, and the transfer ID; for example, the media signaling agent binds the address of the access node, address of the multicast node, and transfer ID. When establishing a media connection, the access node is connected to the media signaling agent. The media signaling agent finds the multicast node according to the transfer ID, and then transfers a message between the access node and the multicast node. Thus, the media signaling agent transfers information exchanged between the access node and the multicast node, and collects and reports media session information in the media connection process to the UM.

FIG. 4 also shows the relations between various messages transmitted in a multicast tree after a media signaling agent is added. The media signaling agent is involved in the media connection process of all multicast nodes. Therefore, the session manager is configured to collect the session information of an access node, and the media signaling agent is configured to collect the media session information of the access node, thus collecting the information required for quasi-real-time charging.

The UM is configured to generate a quasi-real-time CDR according to the reported session information and media session information to complete the whole charging process. The UM includes an information collecting unit and a CDR generating unit. The information collecting unit is configured to collect information to be reported. The information may be session information, media session information, or traffic information. The CDR generating unit is configured to generate the corresponding CDR according to the reported information to complete the charging process.

In addition, the charging system may further include a traffic collector, which is configured to collect and report the traffic information of the access node in the media connection process. FIG. 8 is a schematic drawing illustrating traffic collection after the traffic collector is added. The traffic collector may be a Broadband Remote Access Server (BRAS) or another device such as a Media Gateway (MG). If the traffic information is collected, the UM generates a traffic-based charging CDR according to the reported traffic information to complete the charging process.

An interface may further be configured between the traffic collector and the media signaling agent, and the interface is configured for the media signaling agent to control the traffic collector to collect traffic information.

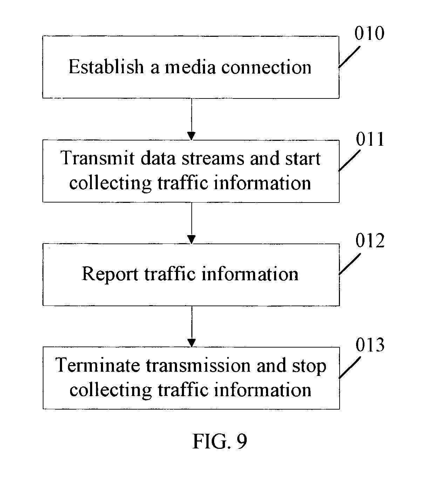

The flowchart of a method for the media signaling agent to control the traffic collector to collect traffic information is shown in FIG. 9. FIG. 9 includes the following steps:
Step 010: An access node establishes a media connection with a multicast node. An exchanged message in the media connection process is transferred by a media signaling agent.
Step 011: The access node and the multicast node transmit media data streams. At the same time, the media signaling agent instructs a traffic collector to collect traffic information. The message exchanged between the access node and the multicast node is transferred by the media signaling agent. Therefore, the media signaling agent accurately knows the time for transmitting media data streams between the access node and the multicast node. When the access node and the multicast node transmit media data streams, the media signaling agent uses an interface between the traffic collector and it to instruct the traffic collector to collect traffic information.
Step 012: The traffic collector reports the collected traffic information to a UM.
Step 013: The access node and the multicast node stop transmitting media data streams. At the same time, the media signaling agent instructs the traffic collector to stop collecting traffic information. The traffic collector stops reporting traffic information. When knowing that the access node and the multicast node stop transmitting media data streams, the media signaling agent uses the configured interface to instruct the traffic collector to stop collecting traffic information.

Through the foregoing control method, the media signaling agent can control the traffic collector to collect traffic information. After collecting the related traffic information, the traffic collector reports the collected traffic information to the UM. The UM generates a traffic-based charging CDR according to the reported traffic information to complete the charging process.

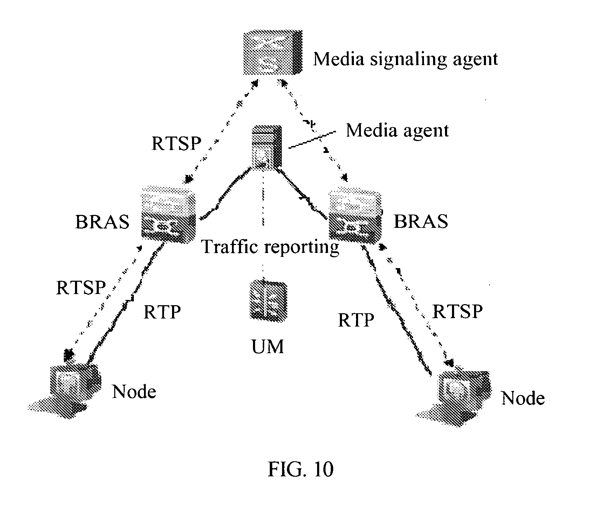

In addition, the charging system may further include a media agent, which is configured to: forward media data streams transmitted between the access node and the multicast node, acquire traffic information according to the forwarded media data streams, and report the acquired traffic information to the UM. FIG. 10 is a schematic drawing illustrating traffic collection after a media agent is added. In FIG. 10, after the media agent is added, media data streams transmitted between an access node and a multicast node are all forwarded by the media agent. The media agent reports the traffic information of the transferred media data streams to a UM. The UM generates a traffic-based charging CDR according to the reported traffic information to complete the charging process.

An interface is configured between the media agent and the media signaling agent, and the interface is configured for the media signaling agent to control the media agent to report traffic information.

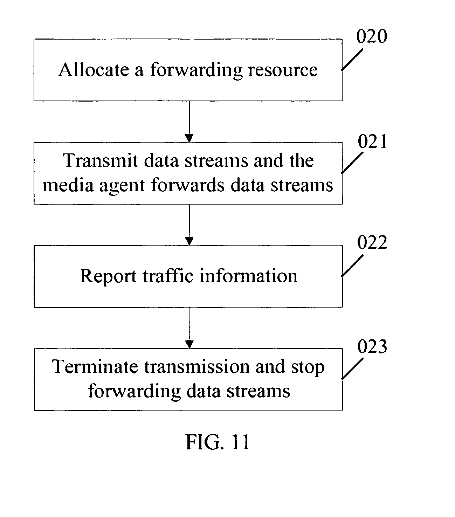

The flowchart of a method for a media signaling agent to control a media agent to report traffic information is shown in FIG. 11. FIG. 11 includes the following steps:
Step 020: A media agent allocates a resource for forwarding media data streams. In the process of the media connection between an access node and a multicast node, a media signaling agent transfers the corresponding exchanged message, and uses an interface configured between the media agent and it to request a resource for forwarding media data streams. After receiving the request, the media agent allocates the corresponding resource for forwarding media data streams.
Step 021: The access node and the multicast node transmit media data streams. At the same time, the media signaling agent instructs the media agent to forward media data streams transmitted between the access node and the multicast node. When knowing that the access node and the multicast node start transmitting media data streams, the media signaling agent uses the configured interface to instruct the media agent to forward the transmitted media data streams. After receiving the instruction, the media agent uses the allocated resource for forwarding media data streams to forward the media data streams.
Step 022: The media agent reports the traffic information of the forwarded media data streams to a UM.
Step 023: The access node and the multicast node stop transmitting media data streams. At the same time, the media signaling agent instructs the media agent to stop forwarding media data streams. The media agent also stops reporting traffic information and releases the allocated resource for forwarding media data streams.

Through the foregoing method, to facilitate the media agent to collect and report traffic information according to the sessions of each group of nodes, an interface may be added between the media signaling agent and the media agent so that the media agent can accurately know the nodes between which current media data traffic occurs. Thus, the media agent forwards the required media data streams and reports related traffic information to the UM. The UM generates a traffic-based charging CDR according to the reported traffic information to complete the charging process.

The technical solution is further described hereunder with reference to specific embodiments.

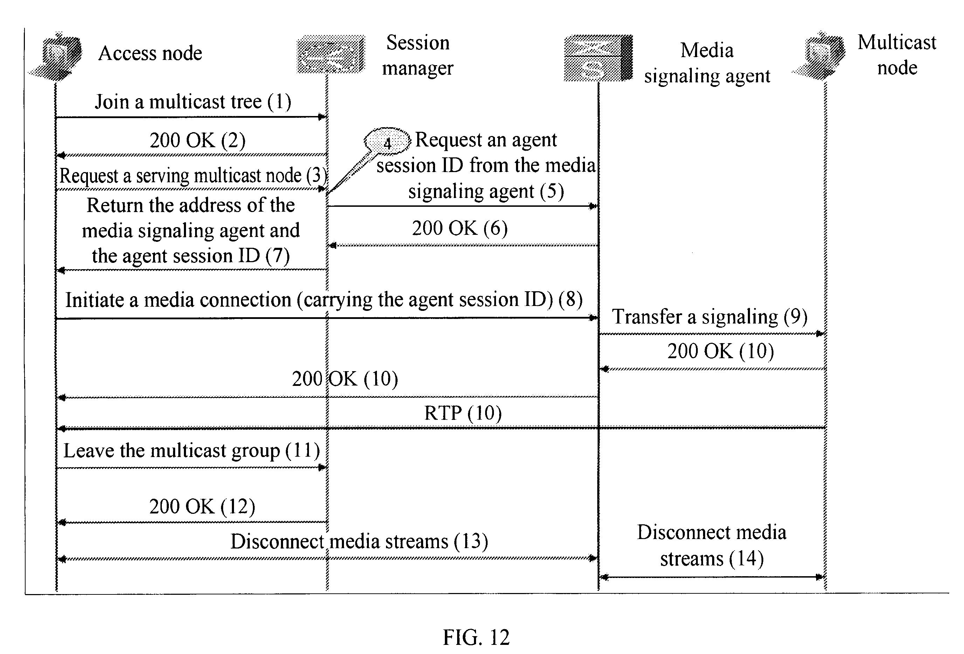

First embodiment: In this embodiment, quasi-real-time charging is implemented in an application layer multicast network after a media signaling agent is added. FIG. 12 is a flowchart of acquiring media data streams by an access node after a media signaling agent is added. FIG. 12 includes the following steps:
Step 1: An access node sends a request to a session manager to join a multicast group.
Step 2: After authentication, the session manager lets the access node join the multicast group, and then notifies the access node of successful join though an acknowledgement message, namely, a 200 OK message.
Step 3: The access node requests a serving multicast node from the session manager.
Step 4: The session manager selects a serving multicast node for the access node and selects a media signaling agent.
Step 5: The session manager requests a transfer ID (agent session ID) from the media signaling agent, and sends the address of the access node and the address of the multicast node to the media signaling agent.
Step 6: The media signaling agent generates an agent session ID, binds the address of the access node and the address of the multicast node with the agent session ID, and then returns the agent session ID to the session manager.
Step 7: The session manager returns the address of the media signaling agent and the agent session ID to the access node.
Step 8: The access node sends a connection message carrying the agent session ID to the media signaling agent.
Step 9: The media signaling agent finds the multicast node according to the agent session ID, and transfers the exchanged message.
Step 10: The multicast node negotiates media parameters with the access node, and transmits media data streams to the access node; in FIG. 12, the multicast node transmits media data streams through RTP.
Step 11: The access node is ready to leave the multicast group and notifies the session manager of its leave.
Step 12: The session manager manages the leave of the access node, and then returns an acknowledgement message, namely, a 200 OK message to the access node.
Step 13: The access node requests to disconnect the media connection with the media signaling agent.
Step 14: The media signaling agent instructs the multicast node to disconnect the media connection.

In the whole connection and transmission process, the media signaling agent is involved in the process of the media connection between the access node and the multicast node. Thus, the session manager can collect and report the session information of the access node; the media signaling agent can collect and report the media session information of the access node; and the UM can generate a quasi-real-time charging CDR according to the reported session information and media session information to complete the quasi-real-time charging process.

Second embodiment: Based on the first embodiment, a traffic collector is added. In this embodiment, the traffic collector is a BRAS. Traffic-based charging is implemented in an application layer multicast network by collecting traffic information in the process of transmitting media data streams.

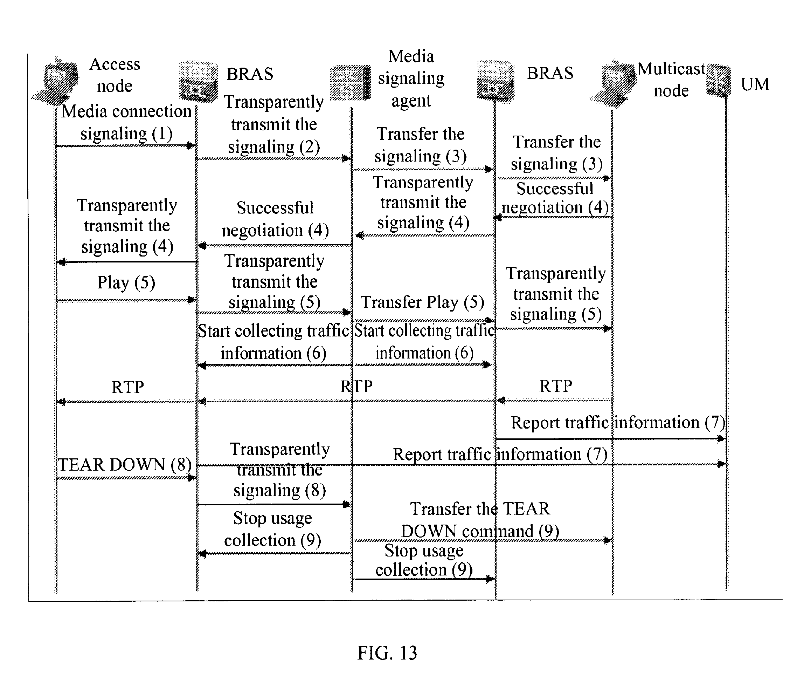

When traffic information is collected through the BRAS, all network traffic needs to pass through the BRAS. Therefore, the BRAS can collect all data traffic information. The BRAS, however, can neither identify services accurately nor make fine statistics of service-based traffic separately. When traffic information is collected through the BRAS, the key is to control the BRAS to collect the required traffic information. Therefore, a corresponding interface is configured between the media signaling agent and the BRAS. The interface is configured for the media signaling agent to notify the BRAS to start or stop collecting traffic information. After receiving the corresponding command, the BRAS collects and reports related traffic information or stops collecting traffic information according to the requirement of the command. FIG. 13 is a flowchart of collecting and reporting traffic information. FIG. 13 includes the following steps:
Step 1: An access node initiates a media connection process to a BRAS.
Step 2: The BRAS transparently transmits a message to a media signaling agent.
Step 3: The media signaling agent transfers the message to a multicast node through the BRAS.
Step 4: The multicast node negotiates media parameters and returns the media parameters to the initiator, namely, the access node, through the BRAS and the media signaling agent.
Step 5: The access node initiates a Play command to indicate playing, that is, to indicate transmitting data streams.
Step 6: The media signaling agent transfers the Play command and instructs the BRAS to start collecting traffic information.
Step 7: The BRAS starts collecting traffic information and reports the collected traffic information to a UM.
Step 8: The access node initiates a TearDown command to the media signaling agent to indicate disconnecting media streams.
Step 9: The media signaling agent transfers the TearDown command to the multicast node and instructs the BRAS to stop collecting traffic information.

Through the foregoing process, the UM can generate a traffic-based charging CDR according to the traffic information reported by the BRAS to complete the whole charging process.

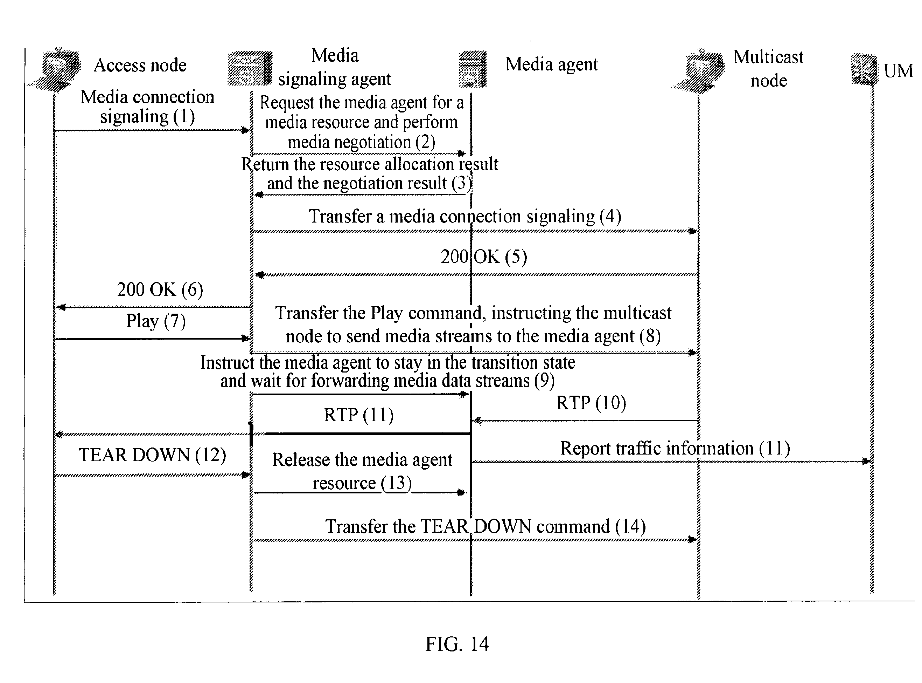

Third embodiment: Traffic-based charging in an application layer multicast network is taken as an example. In this embodiment, a media agent is configured to report related traffic information. After the media agent is added, media data streams transmitted between an access node and a multicast node are forwarded by the media agent. The media agent reports the transferred traffic information to a UM. An interface is configured between the media agent and a media signaling agent, and the interface is configured for the media signaling agent to control the media agent to report traffic information. FIG. 14 is a flowchart of collecting and reporting traffic information. FIG. 14 includes the following steps:
Step 1: An access node initiates a media connection process to a media signaling agent.
Step 2: The media signaling agent requests a media resource from a media agent. The access node negotiates media parameters with the media agent.
Step 3: The media agent records the current session, allocates a session resource, and returns the resource allocation result and the negotiation result to the media signaling agent.
Step 4: The media signaling agent transfers a media connection signaling to a multicast node, and instructs the multicast node to negotiate media parameters with the current media agent.
Step 5: The multicast node negotiates media parameters and returns the media parameters.
Step 6: The media signaling agent transfers the result to the initiator, namely, the access node.
Step 7: The access node initiates a Play command to request transmission of data streams.
Step 8: The media signaling agent transfers the Play command to the multicast node to instruct the multicast node to push media streams to the media agent.
Step 9: The media signaling agent instructs the media agent to stay in the transition state and wait for forwarding media data streams.
Step 10: The multicast node pushes data streams to the media agent.
Step 11: The media agent forwards data streams to the access node and reports media traffic information to a UM.
Step 12: The access node initiates a TearDown command to the media signaling agent to indicate disconnecting media streams.
Step 13: The media signaling agent instructs the media agent to stop forwarding media data streams, and deletes the locally allocated agent resource.
Step 14: The media signaling agent transfers the message to the multicast node.

Through the foregoing process, the UM can generate a traffic-based charging CDR according to the reported traffic information to complete the whole charging process.

The two traffic-based charging methods described in the second and third embodiments should be used in different scenarios. In the traffic-based charging by way of a BRAS, an interface between the BRAS and the media signaling agent needs to be opened, and the support by the BRAS is required during deployment. In the traffic-based charging by way of a media agent, no change needs to be made to the existing bearer network.

It is understandable to those skilled in the art that all or part of the steps in the foregoing embodiments may be performed through hardware instructed by a program. The program may be stored in a computer-readable storage medium such as a Read-Only Memory/Random Access Memory (ROM/RAM), a magnetic disk, and a compact disk.

To sum up, with the present invention, the media data such as media session information of a node can be acquired, and the corresponding CDR can be generated according to the collected media data, thus implementing quasi-real-time charging or traffic-based charging in an application layer multicast network.

Although the invention has been described through several exemplary embodiments, the invention is not limited to such embodiments. It is apparent that those skilled in the art can make various modifications and variations to the invention without departing from the scope of the present invention. The invention is intended to cover the modifications and variations provided that they fall in the scope of protection defined by the following claims.

## Claims

1. A charging system in an application layer multicast network, comprising:
a session manager, configured to collect and report session information of an access node and a multicast node in a session process;
a media signaling agent configured to: receive a media connection signaling from the access node to the multicast node in a media connection process, send the media connection signaling to the multicast node, and acquire media session information of the access node according to the media connection signaling; and report the media session information; and
a Usage Mediator, UM, configured to generate a Call Detail Record, CDR, according to the session information reported by the session manager and the media session information reported by the media signaling agent;
wherein the media signaling agent comprises:
a receiving unit, configured to receive the media connection signaling of the access node in the media connection process;
a processing unit, configured to: establish a mapping between the access node and the multicast node that establish a media connection and a transfer ID, and find the multicast node according to the access node information in the media connection signaling and the transfer ID when the access node and the multicast node establish the media connection;
a transferring unit, configured to send the media connection signaling received by the receiving unit to the multicast node found by the processing unit, and
an information acquiring unit, configured to acquire the media session information of the access node in the process of transferring the media connection signaling by the transferring unit.
the media signaling agent further comprises:
an information reporting unit, configured to report the media session information acquired by the information acquiring unit.

2. The charging system of claim 1, further comprising:
a traffic collector, configured to collect and report the traffic information of the access node in the media connection process;
wherein the UM is configured to generate a traffic-based charging CDR according to the traffic information reported by the traffic collector.

3. The charging system of claim 2, wherein an interface is configured between the traffic collector and the media signaling agent, and the interface is configured for the media signaling agent to control the traffic collector to collect traffic information.

4. The charging system of claim 1, further comprising;
a media agent, configured to: forward media data streams between the access node and the multicast node, and report traffic information of the forwarded media data streams to the UM; and
an interface, configured between the media agent and the media signaling agent, and configured for the media signaling agent to control the media agent to report traffic information.

## Patentansprüche

1. Vergebührungssystem in einem Anwendungsschicht-Multicast-Netzwerk, umfassend:
einen Sitzungsmanager, der dafür ausgelegt ist, Sitzungsinformationen eines Zugangsknotens und eines Multicast-Knotens in einem Sitzungsprozess zu sammeln und zu melden;
einen Mediensignalisierungsagenten, der für Folgendes ausgelegt ist: Empfangen einer Medienverbindungssignalisierung von dem Zugangsknoten an den Multicast-Knoten in einem Medienverbindungsprozess, Senden der Medienverbindungssignalisierung zu dem Multicast-Knoten und Beschaffen von Mediensitzungsinformationen des Zugangsknotens gemäß der Medienverbindungssignalisierung; und Melden der Mediensitzungsinformationen; und
einen Benutzungsmittler UM, der dafür ausgelegt ist, gemäß den durch den Sitzungsmanager gemeldeten Sitzungsinformationen und den durch den Mediensignalisierungsagenten gemeldeten Mediensitzungsinformationen einen Rufdatensatz CDR zu erzeugen;
wobei der Mediensignalisierungsagent Folgendes umfasst:
eine Empfangseinheit, die dafür ausgelegt ist, die Medienverbindungssignalisierung des Zugangsknotens in dem Medienverbindungsprozess zu empfangen;
eine Verarbeitungseinheit, die für Folgendes ausgelegt ist: Herstellen einer Abbildung zwischen dem Zugangsknoten und dem Multicast-Knoten, die eine Medienverbindung und eine Transfer-ID herstellen, und Finden des Multicast-Knotens gemäß den Zugangsknoteninformationen in der Medienverbindungssignalisierung und der Transfer-ID, wenn der Zugangsknoten und der Multicast-Knoten die Medienverbindung herstellen;
eine Transfereinheit, die dafür ausgelegt ist, die durch die Empfangseinheit empfangene Medienverbindungssignalisierung zu dem durch die Verarbeitungseinheit gefundenen Multicast-Knoten zu senden, und
eine Informationsbeschaffungseinheit, die dafür ausgelegt ist, die Mediensitzungsinformationen des Zugangsknotens in dem Prozess des Transfers der Medienverbindungssignalisierung durch die Transfereinheit zu beschaffen,
wobei der Mediensignalisierungsagent ferner Folgendes umfasst:
eine Informationsmeldeeinheit, die dafür ausgelegt ist, die durch die Informationsbeschaffungseinheit beschafften Mediensitzungsinformationen zu melden.

2. Vergebührungssystem nach Anspruch 1, ferner umfassend:
einen Verkehrssammler, der dafür ausgelegt ist, die Verkehrsinformationen des Zugangsknotens in dem Medienverbindungsprozess zu sammeln und zu melden;
wobei der UM dafür ausgelegt ist, gemäß den durch den Verkehrssammler gemeldeten Verkehrsinformationen einen auf Verkehr basierenden Vergebührungs-CDR zu erzeugen.

3. Vergebührungssystem nach Anspruch 2, wobei eine Schnittstelle zwischen dem Verkehrssammler und dem Mediensignalisierungsagenten konfiguriert ist und die Schnittstelle dafür ausgelegt ist, dass der Mediensignalisierungsagent den Verkehrssammler steuert, Verkehrsinformationen zu sammeln.

4. Vergebührungssystem nach Anspruch 1, ferner umfassend:
einen Medienagenten, der für Folgendes ausgelegt ist: Weiterleiten von Mediendatenströmen zwischen dem Zugangsknoten und dem Multicast-Knoten und
Melden von Verkehrsinformationen der weitergeleiteten Mediendatenströme an den UM; und
eine zwischen dem Medienagenten und dem Mediensignalisierungsagenten konfigurierte Schnittstelle, die dafür konfiguriert ist, dass der Mediensignalisierungsagent den Medienagenten steuert, Verkehrsinformationen zu melden.

## Revendications

1. Système de facturation dans un réseau de multidiffusion à couche d'application, comprenant :
un gestionnaire de session, configuré pour collecter et communiquer des informations de session d'un noeud d'accès et d'un noeud de multidiffusion dans un processus de session ;
un agent de signalisation multimédia configuré pour recevoir une signalisation de connexion multimédia depuis le noeud d'accès vers le noeud multimédia dans un processus de connexion multimédia, envoyer la signalisation de connexion multimédia au noeud de multidiffusion, et acquérir des informations de session multimédia du noeud d'accès en fonction de la signalisation de connexion multimédia ; et communiquer les informations de session multimédia ; et
un Médiateur d'Usage, UM, configuré pour générer un Enregistrement de Données d'Appel, CDR, en fonction des informations de session communiquées par le gestionnaire de session et des informations de session multimédia communiquées par l'agent de signalisation multimédia ;
dans lequel l'agent de signalisation multimédia comprend :
une unité de réception, configurée pour recevoir la signalisation de connexion multimédia du noeud d'accès dans le processus de connexion multimédia ;
une unité de traitement, configurée pour : établir une mise en correspondance entre le noeud d'accès et le noeud de multidiffusion qui établissent une connexion multimédia et une ID de transfert, et trouver le noeud de multidiffusion en fonction des informations de noeud d'accès dans la signalisation de connexion multimédia et l'ID de transfert quand le noeud d'accès et le noeud de multidiffusion établissent la connexion multimédia ;
une unité de transfert, configurée pour envoyer la signalisation de connexion multimédia reçue par l'unité de réception au noeud de multidiffusion trouvé par l'unité de traitement, et
une unité d'acquisition d'informations, configurée pour acquérir les informations de session multimédia du noeud d'accès dans le processus de transfert de la signalisation de connexion multimédia par l'unité de transfert ;
l'agent de signalisation multimédia comprenant en outre :
une unité de communication d'informations, configurée pour communiquer les informations de session multimédia acquises par l'unité d'acquisition d'informations.

2. Système de facturation selon la revendication 1, comprenant en outre :
un collecteur de trafic, configuré pour collecter et communiquer les informations de trafic du noeud d'accès dans le processus de connexion multimédia ;
l'UM étant configuré pour générer un CDR de facturation basé sur le trafic en fonction des informations de trafic communiquées par le collecteur de trafic.

3. Système de facturation selon la revendication 2, dans lequel une interface est configurée entre le collecteur de trafic et l'agent de signalisation multimédia, et l'interface est configurée pour que l'agent de signalisation multimédia commande le collecteur de trafic afin qu'il collecte des informations de trafic.

4. Système de facturation selon la revendication 1, comprenant en outre :
un agent multimédia, configuré pour : transmettre des trains de données multimédia entre le noeud d'accès et le noeud de multidiffusion, et communiquer à l'UM des informations de trafic des trains de données multimédia transmis ; et
une interface, configurée entre l'agent multimédia et l'agent de signalisation multimédia, et configurée pour que l'agent de signalisation multimédia commande l'agent multimédia afin qu'il communique des informations de trafic.
